# EUROPEAN PATENT APPLICATION

(11) **EP 4 379 372 A1**
(43) Date of publication of application: **05.06.2024**
(21) Application number: 22210679.1
(22) Date of filing: 30.11.2022
(51) Int. Cl.: G01N 30/88, G01N 30/26, G01N 30/08, G01N 30/02

(54) **GAS CHROMATOGRAPH AND GAS CHROMATOGRAPHIC SYSTEM HAVING AN AGGREGATE FOR GENERATING HYDROGEN**

(71) Applicant: Koninklijke Philips N.V., 5656 AG Eindhoven (NL)
(72) Inventor: HAARTSEN, Jaap Roger, 5656AG Eindhoven (NL); MULDER, Marcel, 5656AG Eindhoven (NL); BOER, Leander, 5656AG Eindhoven (NL); DIRKSEN, Peter, 5656AG Eindhoven (NL); KLOOTWIJK, Johan Hendrik, 5656AG Eindhoven (NL)
(74) Representative: Philips Intellectual Property & Standards

(57) **Abstract**

The invention relates to a gas chromatographic system 1000 for detecting volatile organic compounds in an analyte 320 with a gas chromatograph 100 having an injector for injecting analyte 320, a pre-concentrator 120, a column 140 equipped with a stationary phase 141 and a gas detector 150 configured to detect the analyte 320 component eluted from the column 140. The invention suggests an aggregate 160 having an outlet coupled to the gas chromatograph 100 and being configured to receive and process a hydrogen containing medium 330 for generating hydrogen 310 and supplying the hydrogen 310 to the gas chromatograph 100. The invention further relates to such an aggregate 160 and to a method of operating such a chromatographic system.

## Description

### FIELD OF THE INVENTION

The invention relates to a gas chromatographic system for detecting volatile organic compounds in an analyte. Further, the invention relates to a gas generator for a gas chromatographic system, to a method for operating such a gas chromatographic system.

### BACKGROUND OF THE INVENTION

Gas chromatographic systems usually have a column and a detector for the separation and identification of different components in an analyte, such as volatile organic compounds. Analytes passing through the column coated with a layer employed as stationary phase are separated into their components owing to differences in their interactions with the stationary phase. The detector measures the amount of separated components exiting the column as a function of time. For carrying the analytes through the column, a flow of a carrier gas employed as the mobile phase has to be provided. In addition, some detectors require a combustion gas for detection of the amount of separated components exiting the column. Thus, chromatographic systems further comprise a source of fluid, e.g. a fluid container for storing carrier gas or combustion gas, for example nitrogen, helium or hydrogen serving as a carrier gas, as disclosed in US 2020/0049673 A1. However, a fluid container is limited in terms of capacity. Thus, longer operating times are always accompanied by an increased system size. In continuous gas chromatography, as for example required in distributed sensor networks used in green houses, this is a particular drawback.

### SUMMARY OF THE INVENTION

It is an object of the present invention to propose a concept of providing a carrier gas serving as mobile phase for a gas chromatograph that allows longer operating times without increasing the system size.

In a first aspect of the invention, a gas chromatographic system for detecting volatile organic compounds in an analyte is presented. The gas chromatographic system comprises a gas chromatograph having an injector for injecting the analyte into the gas chromatograph, a pre-concentrator configured to concentrate the injected analyte, a column equipped with a stationary phase and a gas detector configured to detect the analyte component eluted from the column. The gas chromatographic system further comprises an aggregate having an outlet coupled to the gas chromatograph and being configured to receive and process a hydrogen containing medium for generating hydrogen and supplying the hydrogen to the gas chromatograph via the outlet. By having an aggregate that is directly coupled to the gas chromatograph and adapted to process a hydrogen containing medium for generating hydrogen, additional fluid containers and piping can be avoided. Thus, the size of the gas chromatographic system can be reduced and the operating time is no longer limited by the capacity of the fluid container. In this regard, the term "processing" shall be understood as executing chemical and/or physical reactions influencing the purity, the aggregate state or the chemical composition of the hydrogen containing medium thereby providing a hydrogen gas flow. The term "generating" on the one hand shall be understood as generating hydrogen from a mixture containing hydrogen and on the other hand shall be understood as reusing contaminated hydrogen by converting into sufficiently pure hydrogen. Preferentially, the gas chromatograph is a micro gas chromatograph. Micro gas chromatography is performed on a micro gas chromatograph to increase portability, decrease power consumption, and increase the speed of analysis. In that regard, the term "micro gas chromatograph" refers herein to any field portable versions of a gas chromatograph comprising one or more microfabricated components. Further, such an aggregate provides a flow of hydrogen having a sufficient velocity for carrying the analyte through the column without the need of a pump for acceleration of the carrier gas. However, a pump may be provided to further control velocity of the carrier gas. In alternative to the injector, a pump may be associated to an inlet for injecting the analyte into the pre-concentrator and into the flow path of the carrier gas which is hydrogen according to the invention.

In that regard, the inventors acknowledged that hydrogen provides optimal flow properties resulting in an improved resolution. In particular, by using hydrogen an increased flow velocity range is provided allowing sufficient detection results of the detector due to less tolerances when compared e.g. to nitrogen. A preferred velocity of hydrogen serving as a carrier gas allowing optimized results is around 40 cm/sec.

Preferably, the aggregate comprises a source of water and a polymer electrolyte membrane (PEM) electrolyzer configured to electrolyze the water. In PEM electrolysis of water, a cell equipped with a PEM meaning a thin polymer electrolyte membrane, e.g. of a solid polymer electrolyte (SPE) is responsible for the conduction of protons, separation of product gases, and electrical insulation of the electrodes. Water provided on the anode side of the PEM electrolyzer is processed into hydrogen provided at the cathode side of the PEM electrolyzer, while oxygen is provided on the anode side of the PEM electrolyzer. One of the largest advantages of PEM electrolyzers is their ability to operate at high current densities allowing reduced operational costs. Further, the polymer electrolyte allows the PEM electrolyzer to operate with a very thin membrane from 100 to 200 µm while allowing high pressures, resulting in low ohmic losses and a high compressed hydrogen output accordingly. Thus, a PEM electrolyzer is in particular beneficial when used for micro gas chromatographs.

It is further preferred that the aggregate has an aggregate inlet port equipped with a filter configured to filter the hydrogen containing medium.

According to a preferred embodiment, the hydrogen containing medium is ambient air and the filter is an air filter configured to filter the inflowing ambient air. Thus, the aggregate uses a medium that is easy accessible in the environment of the gas chromatographic system.

According to an alternative embodiment, the hydrogen containing medium is exhaust gas from the gas chromatograph and the filter is an exhaust gas filter configured to filter inflowing exhaust gas. Thus, a closed system is provided in which the exhaust gases are filtered and reused for generating or reusing hydrogen. Such an exhaust gas filter is configured to filter volatile organic compounds from the exhaust gas and preferably comprises one, more or all of the following: a carbon-based granular absorbent, porous polymers, metal organic frameworks, thin film absorbents and foam based absorbents. An example of a carbon-based granular adsorbent commonly used to filter VOCs is highly porous activated charcoal or carbon.

According to another preferred embodiment, the hydrogen containing medium is exhaust gas from the gas chromatograph and the filter is a PEM fuel cell configured to filter inflowing exhaust gas. A PEM fuel cell is a PEM operated fuel cell.

Preferably, the aggregate comprises a pressurized hydrogen buffer being in fluid connection with the outlet to provide a pressurized hydrogen flow. By having a pressurized hydrogen buffer, the storing capacity of the aggregate is increased and a volume flow having a sufficiently high velocity is provided to serve as the mobile phase for carrying the analyte through the column without acceleration caused by an additional pump. Preferably, the aggregate further comprises a desiccant to dry the hydrogen in the pressurized hydrogen buffer. Further preferred, that the aggregate has a heating unit associated to the desiccant and configured to dry the desiccant for regeneration of the latter. Further preferred, the desiccant is included in a dual bed dryer allowing continuous drying of desiccant in a first bed and drying the hydrogen by desiccant in a second bed at the same time and vice versa.

According to a preferred embodiment, the outlet has a nozzle configured to minimize the flow rate fluctuations. Thus, a more constant hydrogen flow is provided at the outlet for supplying the hydrogen flow to the gas chromatograph.

According to an alternative preferred embodiment, the outlet has a proportional valve configured to control the flow of hydrogen. Thus, the output of hydrogen flow can be controlled depending on the actual requirements of the gas chromatographic system.

Preferably, the aggregate has a pressure relief valve configured to exhaust an over pressure.

According to a preferred embodiment, the source of water comprises a condenser for water harvesting and a condensate buffer for water storing. The condenser comprises a flow passage having a condenser surface and a cooling unit configured to actively cool the condenser surface. The condenser surface may have a hydrophobic coating to facilitate removal of the condensed water. The condenser surface may have features to increase the surface area. A condenser allows the condensation of water contained in ambient air thereby generating water that can be used for the PEM electrolysis. A condensate buffer for storing the generated condensate allows a continuous generation of hydrogen from the stored condensate. It is preferred that the condenser or at least the condenser surface of the flow passage is pyramid shaped. The flow passage preferably has a hydrophobic coating. Thus, the condensate can easily flow along the hydrophobic coating and will be collected at the lowest point of the pyramid shaped condenser. It shall be understood that the pyramid shaped condenser has its lowest point proximal to the PEM electrolyzer, when the aggregate is in an upright position.

Preferably, the aggregate has a temperature control unit configured to control the condenser surface temperature. Such a temperature control unit is preferably integrated in a central control unit or provided as a separate temperature control unit.

Preferably, the aggregate has one or more sensors, in particular a humidity sensor and/or a temperature sensor to facilitate control of the water condensation.

Preferably, the cooling unit comprises a Peltier element, a heat sink and an energy supply, in particular a voltage supply coupled to the Peltier element for providing a voltage, in particular a DC voltage, such that a warm side of the Peltier element adjacent the heat sink and an opposite cold side of the Peltier element is facing the condenser surface are formed. It shall be understood that the cold side of the Peltier element facing the condenser surface can be either in direct contact to the condenser surface or coupled in a heat transmitting manner to the condenser surface. A Peltier element allows thermoelectric cooling based on the so-called Peltier effect. A Peltier element is a solid-state active heat pump which transfers heat from one side of the device to the other with consumption of electrical energy depending on the direction of the current. As such, the Peltier element can be used to transport heat from the cold side to the warm side thereby cooling the ambient air flowing through the flow passage. The heat sink functions to transmit the heat from the warm side of the Peltier element away from the condenser and out of the aggregate. Preferably, the cooling unit further has a fan configured to provide a cooling airstream to the heat sink. Thus, the heat transport out of the aggregate is supported. Preferably, a part of the ambient air flowing through the flow passage is guided through the aggregate in such a manner that a cooling airflow is provided through a cooling passage along a surface of the heat sink.

Preferably, the condenser further has a condensate port configured to connect the flow passage and the condensate buffer to guide condensate from the condenser surface into the condensate buffer. Thus, a defined flow path from the flow passage to the condensate buffer is provided. Preferably, the condensate port is arranged at the lowest point of the flow passage, when the aggregate is in the upright position. As such, the aggregate is collected at the lowest point and directly enters the port to be guided to the condensate buffer. Thus, a more efficient guiding of the condensate is provided thereby reducing loss of condensate and evaporation.

It is further preferred that the condensate buffer comprises a sump arranged below the condenser and above the PEM electrolyzer, when the aggregate is in an upright position. Thus, the condensate is guided to the buffer due to gravity and pipes or pumps and valves can be avoided. It is further preferred that the sump has an overflow with a water seal configured to allow excess of condensate while preventing inflow of air into the sump. In addition or alternatively, it is preferred that the sump has a float switch configured to allow excess of the condensate while preventing inflow of air into the sump, or to discontinue the water generation by switching off the Peltier element. Thus, overflow and damage of the aggregate accordingly can be avoided. Further, evaporation of the condensate is avoided or at least reduced. It is further preferred that the condenser has an oxygen port configured to allow rising of oxygen from the condensate buffer into the flow passage, when the aggregate is in an upright position. Thus, the amount of oxygen present in the condensate buffer is reduced. Preferably, the oxygen port is arranged proximal to the inlet port of the flow passage. Thus, the oxygen can be carried with the inflow of hydrogen containing medium via the flow passage and may be used for cooling the heat sink.

Preferably, the condensate buffer has a lid equipped with small holes that are configured to minimize evaporation of the condensate. An overpressure in the condensate buffer can influence the evaporation point. Thus, by providing small holes, ambient pressure can be maintained in the condensate buffer. The small holes may comprise the condensate port and the oxygen port.

According to another preferred embodiment, the condenser comprises a number of thermal conductors connecting the PEM electrolyzer and the Peltier element for cooling a contact surface of the PEM electrolyzer which at least partly defines the condenser surface. It is further preferred that a receiving space is formed between the two thermal conductors, the contact surface and a thermal insulation attached to the cold side of the Peltier element. In that regard, the receiving space at least partly defines the flow passage and is configured to receive the condensate buffer. It is further preferred, that the condensate buffer is formed by an open cell foam and/or a desiccant, in particular a silica gel or zeolite. The condensate buffer formed by the open cell foam allows the use of the aggregate independent from its orientation since the water is stored in the open cells of the foam. A receiving space defined as described above allows the condensation of water immediately on the surface of the PEM electrolyzer that is cooled by the thermal conductors. In that regard, the thermal conductors shall allow the flow of hydrogen containing medium, in particular ambient air, through the receiving space including the open cell foam serving as condensate buffer. The ambient air flowing through the open cell foam is thus condensed on the surface of the PEM electrolyzer and can be converted into hydrogen that is stored in the pressurized hydrogen buffer.

According to another embodiment, the source of water comprises a water buffer, preferably having an open cell foam and/or a desiccant, in particular a silica gel or zeolite. In the alternative to the use of a condenser, such a water buffer allows the steady usability of water for electrolysis by means of a PEM electrolyzer. A zeolite or silica gel in that regard may store an amount of water until a maximum saturation is reached. In order to extract the water from the zeolite or silica gel, the water buffer further comprises a heating part for evaporating the water and a cooling part for cooling the evaporated water under the dew point thereby generating water for electrolysis by means of a PEM electrolyzer.

Preferentially, the aggregate comprises a hydrogen pump configured to pump filtered hydrogen from the exhaust gas filter to the pressurized hydrogen buffer. Thus, by filtering incoming exhaust gas by means of an exhaust gas filter and pumping the filtered hydrogen into the pressurized hydrogen buffer, a hydrogen cycle is provide allowing reuse of the hydrogen from the gas chromatograph. Instead of using exhaust gases, hydrogen can be bound in a hydrogen-containing medium and released by heating, wherein the supply of hydrogen is controlled by a number of valves. Further preferred, that the aggregate has a filter heating unit associated to the exhaust gas filter and configured to heat the exhaust gas filter for release of the trapped VOCs regeneration of the latter. Preferably, the aggregate comprises at least one valve configured to allow removal of the VOCs released from the exhaust gas filter.

Preferably, the source of water comprises a water buffer and the aggregate comprises the PEM fuel cell configured to produce electricity, in particular by a combustion process, thereby generating water stored in the water buffer, wherein oxygen rising from the water buffer is stored in an oxygen buffer.

According to another preferred embodiment, the source of water is an open cell foam filled with water and arranged adjacent to the PEM electrolyzer. Since the open cell foam is filled with water, the gas chromatographic system and in particular the aggregate can be provided as a closed system using the water received in the open cell foam. Such an open cell foam can be refilled if needed without requiring a tubing system or pressurized containers that would increase the cost of the aggregate. An open cell foam filled with water thus provides an orientation-independent handling of the aggregate and preferably also the whole gas chromatograph and provides low-cost source of water for executing the PEM electrolysis.

Preferably, the aggregate further has a gas diffusion layer configured to provide a barrier between the water buffer and the ambient air that is permeable for an outward gas flow of oxygen generated by the PEM electrolyzer but impermeable for water. Thus, the oxygen generated by the PEM electrolysis can leave the aggregate while any leakage of water from the water buffer is avoided. It is further preferred, that the gas diffusion layer is also impermeable for incoming gas flow other than oxygen. Thus, also the ingress of any gases that may disturb the PEM electrolysis is prevented.

Preferably, the aggregate is coupled to an inlet port of the column or the pre-concentrator for providing a gas flow of hydrogen carrying the analyte through the column. Thus, the hydrogen generated by the aggregate can be used on the one hand for generating a steady gas flow considered as the mobile phase introduced into the column. Further preferred, the aggregate is coupled to an inlet port of the column for providing a gas flow of hydrogen carrying the analyte through the column and to an inlet port of the pre-concentrator for providing a gas flow of hydrogen for pre-concentrating the volatile organic compounds within the pre-concentrator.

Preferably, the aggregate has a control unit having a controllable energy source configured to supply a voltage or current, at least one sensor for providing a sensor signal and a controller, in particular a PID-controller, configured to control the voltage or current supply based on the sensor signal. Preferably, the control unit has a data interface configured for communication with a network for receiving network data. The controller is preferably configured to control the voltage or current supply based on the network data.

The control unit is preferably a central control unit comprising the temperature control unit.

It is further preferred, that the control unit is configured for controlling the hydrogen harvesting in the pressurized hydrogen buffer by having the controller configured to control the supply of voltage or current supplied by the energy source to the PEM electrolyzer based on sensor signals of the sensor, wherein the sensor is a pressure sensor detecting the pressure in the pressurized hydrogen buffer or a flow sensor detecting the hydrogen flow into the pressurized hydrogen buffer.

It is further preferred, that the control unit is configured for controlling the condenser surface temperature by having the controller configured to control the supply of voltage or current supplied by the energy source to the cooling unit based on the sensor signal, wherein the sensor is a temperature sensor detecting the temperature of the condenser surface. In that regard, the temperature of the condenser surface can be controlled to hold a temperature below the dew point of the ambient air but still sufficient high to avoid icing. It is further preferred, that the control unit has a temperature sensor and/or a dew point sensor configured to provide sensor information regarding the dew point of the ambient air.

It is further preferred, that the control unit is configured for controlling the condensate amount stored in the condensate buffer by having the controller configured to control the supply of voltage or current supplied by the energy source to the cooling unit based on the sensor signal. Preferably, the sensor signal is provided by a condensate level monitoring unit comprising one, more or all of the following sensors: a water level sensor, or a flow sensor detecting the condensate flow into the condensate buffer, a humidity sensor detecting humidity in the environment. Preferably, the control unit is further configured to control a float switch that is preferably associated to an overflow of the condensate buffer for selectively allowing an outward flow of condensate. Preferably, the float switch is a first float switch and the control unit is further configured to control a second float switch that is preferably arranged between the PEM electrolyzer and the condensate buffer for selectively blocking a fluid connection between the PEM electrolyze and the condensate buffer.

It is further preferred, that the control unit is configured for controlling the hydrogen harvesting in the pressurized hydrogen buffer by having the controller configured to control the supply of voltage or current supplied by the energy source to the pump based on the sensor signals of the sensor, wherein the sensor is a pressure sensor detecting the pressure in the pressurized hydrogen buffer or a flow sensor detecting the hydrogen flow into the pressurized hydrogen buffer.

It is further preferred, that the control unit is configured for controlling the water amount stored in the water buffer by having the controller configured to control the supply of voltage or current supplied by the energy source to the fuel cell based on the sensor signals of the sensor, wherein the sensor is a pressure sensor detecting the pressure in the pressurized hydrogen buffer or a flow sensor detecting the hydrogen flow into the pressurized hydrogen buffer.

Thus, an optimized process control is enabled be means of the control unit, e.g. avoiding an overflow of the pressurized hydrogen buffer or the condensate buffer and allowing an optimized temperature control for an improved condensation.

In a further preferred embodiment, the aggregate comprises an idle mode storage unit in fluid communication with the pressurized hydrogen buffer, the idle mode storage unit comprising a solid storage medium configured to form hydride in case of contact with hydrogen, a pressure release valve and a hydride storage heater configured to heat the solid storage medium to reform hydrogen from the formed hydride. Thus, the hydrogen is chemically bonded, or absorbed by the metal, without the need for compression in an idle mode of the aggregate. Hydrogen storage in solid storage mediums is based on the principle that some solid mediums, in particular metals and metal alloys are capable of storing gaseous hydrogen. In this process, the hydrogen atoms - i.e. hydrogen in dissolved form - are deposited in so-called "interstitial sites, wherein the solid storage medium, e.g. metal and gas form a compound, the result is a metal hydride. While heat is released during hydrogen absorption, heat must be added for release and, in addition, the pressure must be reduced. In that regard, the heat is generated by the hydride storage heater and the pressure can be reduced by means of the pressure release valve.

Preferentially, the aggregate comprises an intermediate storage unit arranged downstream the aggregate inlet port and upstream the PEM electrolyzer having a desiccant bed for storing, in particular adsorbing water from the hydrogen containing medium and a heating part for evaporating water stored in the desiccant bed. Thus, an intermediate storage is provided enabling storing of humidity in areas where a high humidity of ambient air is provided and saving the humidity for generating hydrogen later on in case the gas chromatograph needs supply of hydrogen. Further, the aggregate may also be used in areas having a low humidity of ambient air.

Preferably, the aggregate comprises a drying unit arranged upstream of the outlet in the transport direction and being configured to dry the hydrogen, wherein the drying unit comprises a drying desiccant, in particular a zeolite or silica gel for storing, in particular adsorbing humidity from the generated hydrogen. Thus, the accuracy of the gas chromatograph is further increased.
Preferably, the aggregate comprises a drying unit heater associated to the drying unit and configured to dry the drying desiccant for regeneration of the latter.

According to a preferred embodiment, the aggregate comprises a nafion dryer unit configured to remove moisture from a hydrogen containing medium, the nafion dryer unit having a nafion dryer for processing moist hydrogen and a purge gas to generate dry hydrogen, an air conveying unit for enabling a flow of hydrogen containing medium and at least one nafion dryer desiccant bed for drying the hydrogen containing medium serving as the purge gas. Preferably, the nafion dryer desiccant bed has an associated bed heater configured for heating the nafion dryer desiccant bed in order to remove stored moisture. Further preferred, the nafion dryer desiccant bed is a first nafion dryer desiccant bed and the nafion dryer unit has a second nafion dryer desiccant bed, a first valve configured for selectively enabling flow of hydrogen containing medium to the first nafion dryer desiccant bed and a third valve configured for selectively enabling flow of hydrogen containing medium to the second nafion dryer desiccant bed. Thus, in case the first nafion dryer desiccant bed is saturated, the purge gas can be provided by the second nafion dryer desiccant bed and vice versa. Preferably, the first nafion dryer desiccant bed has an associated first bed heater and the second nafion dryer desiccant bed has an associated second bed heater. By heating the respective nafion dryer desiccant bed the stored moisture can be released. Preferably, the first nafion dryer desiccant bed is connected to an exhaust outlet and/or a condenser via a second valve, in particular a controllable valve or a check-valve. Thus, the moist air removed from the first nafion dryer desiccant bed can be either exhausted or guided to the condenser. Accordingly, the second nafion dryer desiccant bed is preferably connected to an exhaust outlet and/or the condenser via a fourth valve, in particular a controllable valve or a check-valve. Thus, the moist air removed from the second nafion dryer desiccant bed can be either exhausted or guided to the condenser. Thus when using both, the condenser with the PEM electrolyzer and the nafion dryer unit, the efficiency of the aggregate is further increased.

Preferentially, the aggregate has the outlet coupled for supplying hydrogen to the gas chromatograph to one, more or all of the following:
- the injector for supplying the hydrogen serving as a mobile phase for carrying the analyte in a transport direction,
- the pre-concentrator for supplying the hydrogen serving as a mobile phase for carrying the analyte in the transport direction,
- the column for supplying the hydrogen serving as a mobile phase for carrying the pre-concentrated analyte in the transport direction. Thus, the hydrogen can be used as a mobile phase which ensures a safe operation of the gas chromatograph even in application requiring a high temperature of the pre-concentrator and the column for enabling the pre-concentration of the analyte and separation of the volatile organic compounds.

Preferentially, the aggregate has the outlet coupled for supplying hydrogen to the gas chromatograph to the gas detector for supplying the hydrogen serving as a combustion gas for operation of the gas detector. Thus, the hydrogen can be used as a combustion gas for the gas detector. For example, a suitable gas detector using hydrogen as a combustion gas is a flame ionization detector (FID). The operation of the FID is based on the detection of ions formed during combustion of organic compounds in a hydrogen flame. The generation of these ions is proportional to the concentration of organic species in the sample gas stream.

It is further preferred, that the aggregate is configured to generate oxygen as a by-product and coupled to the gas chromatograph for supplying oxygen to at least one of the following:
- the injector for supplying the oxygen serving as a mobile phase for carrying the analyte in the transport direction,
- the pre-concentrator for supplying the oxygen serving as a mobile phase for carrying the analyte in the transport direction,
- the column for supplying the oxygen serving as a mobile phase for carrying the pre-concentrated analyte in the transport direction, or
- the pre-concentrator for supplying the oxygen for pre-concentrating the analyte. Thus, instead of guiding the by-product into the environment, the oxygen can be used as a mobile phase in case of low temperature applications not requiring a high temperature of the pre-concentrator and the column for enabling the pre-concentration of the analyte and separation of the volatile organic compounds.

In a second aspect of the invention, an aggregate for providing a hydrogen gas flow for a gas chromatographic system, in particular for a gas chromatographic system according to the first aspect of the invention, is presented. The aggregate has an outlet for coupling to the gas chromatograph and is configured to receive and process a hydrogen containing medium for generating hydrogen and supplying the hydrogen to the gas chromatograph. The aggregate for a gas chromatographic system also participates from the advantages described above with regard to the first aspect of the invention.

In a further aspect of the invention, a method for operating a gas chromatographic system, in particular a gas chromatographic system according to the first aspect of the invention, is presented. The method comprises the steps:
- generating pressurized hydrogen serving as a mobile phase for a gas chromatograph,
- providing the mobile phase at an inlet of the gas chromatograph,
- introducing the pressurized hydrogen serving as a mobile phase into the gas chromatograph thereby accelerating the mobile phase,
- injecting an analyte into a pre-concentrator,
- concentrating the analyte comprising volatile organic compounds in the pre-concentrator,
- carrying the analyte by the mobile phase in the transport direction from the pre-concentrator to a column equipped with a stationary phase,
- guiding the pre-concentrated analyte carried by the mobile phase through the column, and
- detecting the volatile organic compounds eluted from the column by a gas detector.

Preferentially, supplying hydrogen to the gas chromatograph comprises one, more or all of the following:
- supplying the hydrogen to the injector for supplying the hydrogen serving as a mobile phase for carrying the analyte,
- supplying the hydrogen to the pre-concentrator for supplying the hydrogen serving as a mobile phase for carrying the analyte,
- supplying the hydrogen to the column for supplying the hydrogen serving as a mobile phase for carrying the pre-concentrated analyte, and
- supplying the hydrogen to the gas detector for supplying the hydrogen serving as a combustion gas for operation of the gas detector. Thus, the hydrogen serves as a mobile phase, as a combustion gas or both.

In case the hydrogen is supplied to the gas detector, the method further comprises supplying oxygen generated as a by-product in the aggregate by supplying the oxygen to one, more or all of the following:
- supplying the hydrogen to the injector for supplying the hydrogen serving as a mobile phase for carrying the analyte,
- supplying the hydrogen to the pre-concentrator for supplying the hydrogen serving as a mobile phase for carrying the analyte,
- supplying the hydrogen to the column for supplying the hydrogen serving as a mobile phase for carrying the pre-concentrated analyte, and
- supplying the oxygen to the gas detector for supplying the oxygen serving as a combustion gas for operation of the gas detector. Thus, the oxygen serves as a mobile phase, as a combustion gas or both. Thus, even the by-products from the aggregate can be used for the gas chromatograph. Oxygen is a suitable carrier gas when avoiding high temperatures in the column and the pre-concentrator.

It shall be understood that the gas chromatographic system of claim 1, the aggregate of claim 18 and the method of claim 19, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
FIG. 1 shows a schematic view of a gas chromatographic system according to a first embodiment,
FIG. 2 shows a schematic view of a gas chromatographic system according to a second embodiment,
FIG. 3 shows a schematic view of an aggregate for providing hydrogen according to a first embodiment,
FIG. 4 shows a schematic view of an aggregate for providing hydrogen according to a second embodiment,
FIG. 5 shows a schematic view of an aggregate for providing hydrogen according to a third embodiment,
FIG. 6 shows a schematic view of an aggregate for providing hydrogen according to a fourth embodiment,
FIG. 7 shows a schematic view of an aggregate for providing hydrogen according to a fifth embodiment,
FIG. 8 shows a schematic view of an aggregate for providing hydrogen according to a sixth embodiment,
FIG. 9 shows a schematic view of an aggregate for providing hydrogen according to a seventh embodiment,
FIG. 10 shows a schematic view of an aggregate for providing hydrogen according to an eight embodiment,
FIG. 11 shows a schematic view of an aggregate for providing hydrogen according to a ninth embodiment,
FIG. 12 shows a schematic view of an aggregate for providing hydrogen according to a tenth embodiment,
FIG. 13 shows a flow chart illustrating method for operating a gas chromatographic system, and
FIG. 14 shows a flow chart illustrating a second embodiment of the method for operating a gas chromatographic system.

### DETAILED DESCRIPTION OF THE EMBODIMENTS

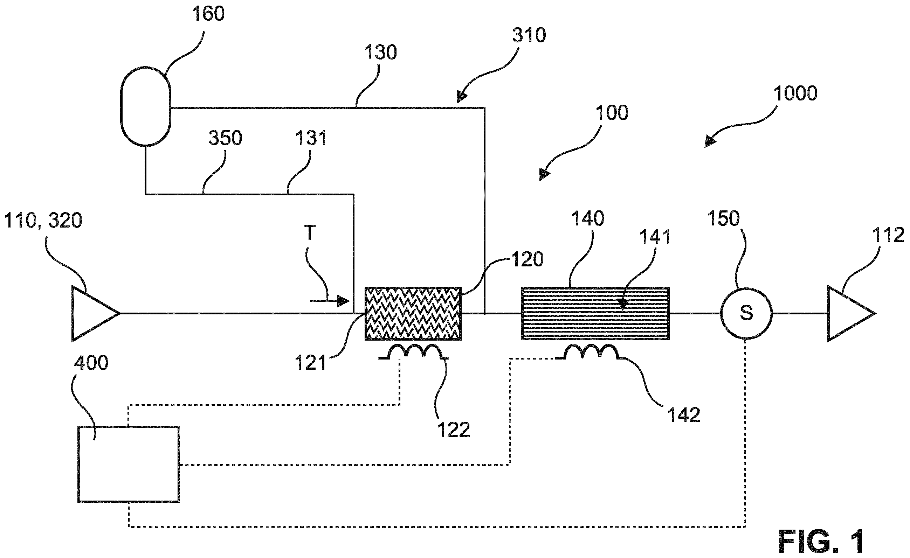

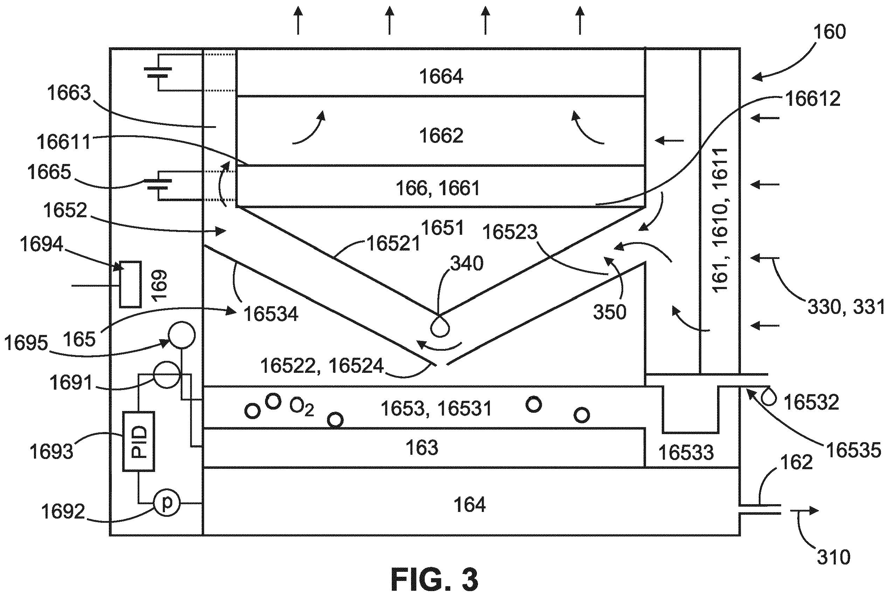

FIG. 1 shows a gas chromatographic system 1000 for detecting volatile organic compounds schematically according to an embodiment of the invention. The gas chromatographic system 1000 comprises an aggregate 160 for providing hydrogen 310 serving as a mobile phase and a gas chromatograph 100, e.g. a micro gas chromatograph, coupled to the aggregate 160 for receiving the hydrogen 310. The aggregate is formed in accordance with any of the embodiments shown in FIG. 3 to FIG. 12, wherein only the reference sign "160" relating to FIG. 3 is indicated for reasons of clarity. The gas chromatographic system 1000 further comprises a system control 400.

The gas chromatograph 100 has an injector 110 for injecting an analyte 320 comprising the volatile organic and a pre-concentrator 120 configured to receive, concentrate and desorb the analyte 320. The pre-concentrator 120 is coupled to said injector 110. Preferably, the pre-concentrator 120 is also coupled to the aggregate 160.

The analyte 320 is transported from the injector 110 to the pre-concentrator 120 in a transport direction T. The pre-concentrator 120 preferably comprises a pre-concentrator heater 122 that is controlled by the system control 400. In the shown embodiment, the injector 110 is configured to inject accelerated analyte into the pre-concentrator 120. In an alternative embodiment (not shown) an inlet having an associated pump may be provided for injecting the analyte 320. A pipe section 130 is coupled to the aggregate 160 for receiving an accelerated flow of a mobile phase provided by the pressurized hydrogen 310 and injecting the hydrogen310 into the flow path of the analyte 320 either before entering the pre-concentrator 120 or after leaving the pre-concentrator 120.

The aggregate 160 is preferably connected to a pre-concentrator inlet port 121 by a bypass 131 for providing a flow of oxygen 350 for pre-concentrating the volatile organic compounds in the analyte 320.

The gas chromatograph 100 further has a column 140 equipped with a stationary phase 141. The column 140 is configured to receive the pre-concentrated analyte 320 carried by the mobile phase that is provided in a constant gas flow advanced by the pressure in the aggregate 160. The column 140 further has a column heater 142 that is controlled by the system control 400. The analyte 320 traversing the column 140 are separated in the column 140 owing to differences in the interactions with the stationary phase 141. The gas chromatograph 100 further has a detector 150 arranged downstream of the column 140 that is configured to detect or identify the volatile organic compounds eluted from the column over time based on the rate at which the volatile organic compounds pass through the column 140. The detector 150 is in signal communication with the system control 400 and configured to provide raw data relating to the detected volatile organic compounds, in particular to passing times. The flow of hydrogen 310 and analyte 320 is finally exhausted via an exhaust port 112.

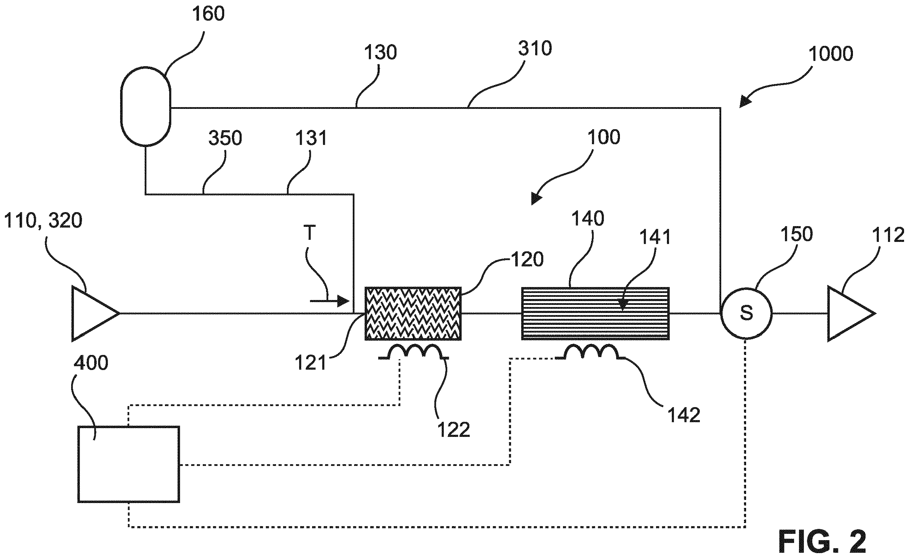

FIG. 2 shows a gas chromatographic system 1000' for detecting volatile organic compounds schematically according to a second embodiment of the invention. In the embodiments shown in FIG. 1 and FIG. 2, similar parts have identical reference signs and reference is made to the above description of FIG. 1. In the following, only the differences between the embodiments shown in FIG. 1 and FIG. 2 are discussed to avoid repetitions.

The gas chromatographic system 1000' comprises an aggregate 160 for providing hydrogen 310 serving as a combustion gas and oxygen 350 as a by-product servicing as a mobile phase and a gas chromatograph 100, e.g. a micro gas chromatograph, coupled to the aggregate 160 for receiving the hydrogen 310 and the oxygen 350. The aggregate is formed in accordance with any of the embodiments shown in FIG. 3 to FIG. 12, wherein only the reference sign relating to FIG. 3 is indicated for reasons of clarity.

A pipe section 130 is coupling the aggregate 160 and the detector 150 for receiving an accelerated flow of a combustion gas provided by the pressurized hydrogen 310 and injecting the hydrogen 310 into the flow path of the analyte 320 either before entering the pre-concentrator 120 or after leaving the pre-concentrator 120.

The aggregate 160 is preferably connected to a pre-concentrator inlet port 121 or a column inlet port (not shown) by a bypass 131 for providing a flow of oxygen 350 serving as a mobile phase for carrying the analyte 320 in the transport direction T.

FIG. 3 shows a first embodiment of the aggregate 160. The aggregate 160 comprises an aggregate inlet port 161 equipped with an air filter 1611 for receiving ambient air 331 serving as a hydrogen containing medium 330, and an outlet port 162 that is configured to be coupled to the gas chromatograph 100 as shown in FIG. 1 for providing hydrogen 310.

The aggregate 160 further comprises a PEM electrolyzer 163, a pressurized hydrogen buffer 164 and a source of water 165. The PEM electrolyzer 163 is configured for PEM electrolysis of the water provided by the source of water 165 in order to generate hydrogen 310 that is stored in the pressurized hydrogen buffer 164. The pressurized hydrogen buffer 164 is in fluid connection with the outlet port 162 for supplying the hydrogen 310 to the gas chromatograph 100.

In the embodiment shown in FIG. 3, the source of water 165 is a condenser 1651 having a flow passage 1652. The flow passage 1652 has a condenser surface 16521 that is actively cooled, a condensate port 16522 configured to guide condensate 340 from the condenser surface 16521 towards a condensate buffer 1653. The flow passage 1652 further has an oxygen port 16523 configured to allow rise of oxygen 350 from the condensate buffer 1653. The condensate port 16522 is provided at the lowest point 16524 of the flow passage 1652. Thus, the condensate 340 flows along the condenser surface 16521 towards the lowest point 16524, passes through the condensate port 16522 and is finally stored in the condensate buffer 1653. In the shown embodiment, the condensate buffer 1653 comprises a sump 16531 having an overflow 16532 equipped with a float switch 16535 configured to allow excess of condensate and a water seal 16533 configured to prevent inflow of air into the sump 16531. The float switch 16535 is preferably a mechanically controlled float switch that opens the flow path to the overflow in case a predefined condensate level is reached. In the alternative, the float switch 16535 is preferably an electrically controllable float switch 16535.

The flow passage 1652 defines a lid 16534 of the sump 16531 in which the ports comprising the condensate port 16524 and the oxygen port 16523 are provided in order to avoid evaporation of the stored condensate 340.

In order to cool the condenser 1651, the aggregate 160 further comprises a cooling unit 166 comprising Peltier element 1661 with a warm side 16611 and a cold side 16612. The cooling unit 166 further has a heat sink 1662 arranged on the warm side 16611 of the Peltier element 1661, wherein the condenser 1651 is arranged on a cold side 16612 of the Peltier element 1661. Thus, the warm side 16611 is attached to the heat sink 1662 so that it remains at, or close to ambient temperature, while the cold side 16612 goes below room temperature. The cooling unit 166 further comprises a fan 1664 configured to provide a cooling airflow in order to cool the heat sink 1662. The cooling unit 166 has a cooling passage 1663 associated to the heat sink 1662 through which gas flow exiting the flow passage 1652 can flow and finally exit the aggregate 160 via the fan 1664. The cooling unit 166 further comprises an energy supply 1665 coupled to the Peltier element 1661 for providing a voltage or current, such that the warm side 16611 of the Peltier element 1661 adjacent the heat sink 1662 and the opposite cold side 16612 of the Peltier element 1661 facing the condenser surface 16521 are formed.

The aggregate 160 further comprises a control unit 169 having an energy source 1691 and a pressure sensor 1692 that are configured to provide signals to a PID-controller 1693 for controlling the energy source 1691.

The control unit 169 is configured to control the PEM electrolyzer 163 depending on the pressure in the pressurized hydrogen buffer 164 that is monitored by the pressure sensor 1692. The amount of hydrogen generated by the PEM electrolyzer 163 depends on the provided current or voltage, in particular DC voltage, and thus the PEM electrolyzer 163 can be controlled via supply of energy by means of the control unit 169.

Preferably, the control unit 169 also has a data interface 1694 configured for communication with a network (not shown) for receiving network data. The PID-controller 1693 is preferably configured for controlling the energy source 1691 also based on the network data. In case the float switch 16535 is preferably an electrically controllable float switch 16535, the control unit 169 further has a condensate level monitoring unit 1695 monitoring the condensate level in the condensate buffer 1653. The condensate level monitoring unit 1695 may comprise a water level sensor monitoring the actual condensate level in the condensate buffer 1653 and further preferred a humidity sensor monitoring the humidity of the ambient air to determine a future condensate level. In a preferred embodiment (not shown), a second float switch be arranged in alternative or in addition to the first float switch 16535 between the condensate buffer 1653 and the PEM electrolyzer 163 for selectively blocking a flow passage (not shown) from the condensate buffer 1653 to the PEM electrolyzer in order to stop the PEM electrolysis. Thus, in case of low condensate level or in case that an over pressure in the pressurized hydrogen buffer 164 is detected by the pressure sensor 1692, the flow of the condensate and thus the hydrogen generation can be interrupted.

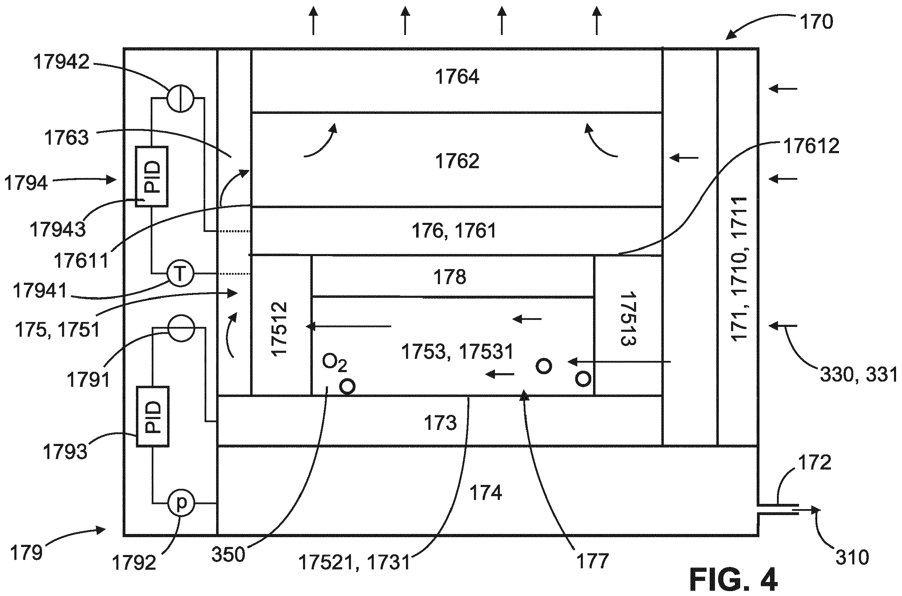

FIG. 4 shows a second embodiment of the aggregate 170. The aggregate 170 comprises an aggregate inlet port 171 equipped with an air filter 1711 for filtering ambient air 331 serving as hydrogen containing medium, and an outlet port 172 that is configured to be coupled to the gas chromatograph 100 as shown in FIG. 1.

The aggregate 170 further comprises a PEM electrolyzer 173, a pressurized hydrogen buffer 174 and a source of water 175. The PEM electrolyzer 173 is configured for PEM electrolysis of the water provided by the source of water 175 in order to generate hydrogen that is stored in the pressurized hydrogen buffer 174. The pressurized hydrogen buffer 174 is in fluid connection with the outlet port 172 for supplying the hydrogen 310 to the gas chromatograph 100 via the outlet port 172.

In the embodiment shown in FIG. 4, the source of water 175 comprises a condenser 1751 having a flow passage 1752. The flow passage 1752 has a condenser surface 17521 that is defined by a contact surface 1731 of the PEM electrolyzer 173.

As described with respect to the first embodiment, the aggregate 170 comprises a cooling unit 176 that is configured to cool the condenser 1751 which has a heat sink 1762, an associated cooling passage 1763, a fan 1764 and a Peltier element 1761 with a warm side 17611 and a cold side 17612.

Further, a first thermal conductor 17512 and a second thermal conductor 17513 are provided that are configured to couple the Peltier element 1761 and the condenser surface 17521 in a heat conducting manner and may be at least partly arranged in the flow passage 1752. The source of water 175 further comprises a condensate buffer 1753 that is provided by an open cell foam 17531 that is received in a receiving space 177. The receiving space 177 is provided in the flow passage 1752 and is defined by the condenser surface 17521 and a thermal insulation 178 attached to the cold side 17612 of the Peltier element 1761. Also the first and second thermal conductor 17522, 17523 may at least partly define the receiving space. The aggregate 170 further comprises a control unit 179 having a controllable energy source 1791 and a pressure sensor 1792 that are configured to provide signals to a first PID-controller 1793 of the control unit 179. The controllable energy source 1791 is a voltage supply in the shown embodiment.

In the shown embodiment, the control unit 179 is configured to control the PEM electrolyzer 173 depending on the pressure in the pressurized hydrogen buffer 174 that is monitored by the pressure sensor 1792. The amount of hydrogen 310 generated by the PEM electrolyzer 173 depends on the provided energy, defined by supplied voltage or current, and thus the PEM electrolyzer 173 can be controlled via supply of DC voltage by means of the control unit 179.

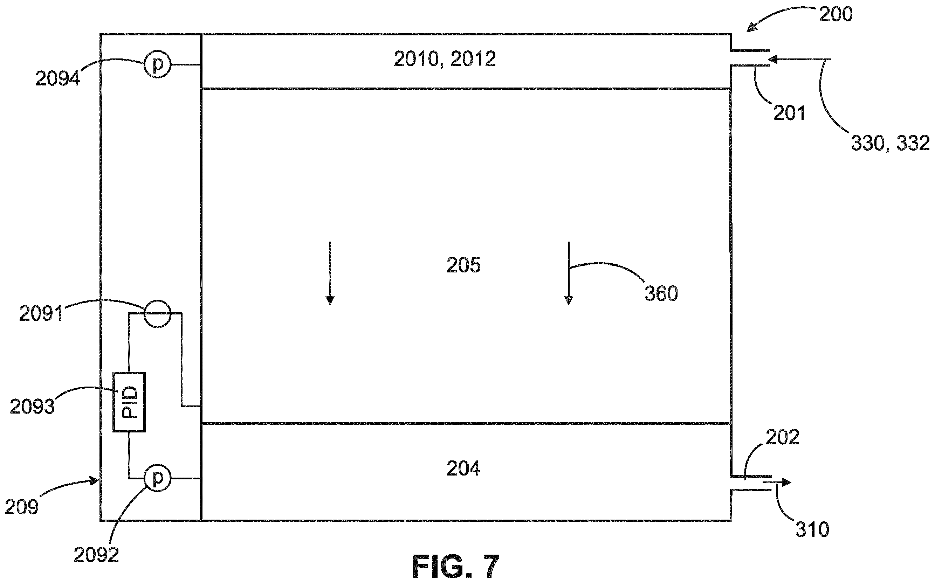

The control unit 179 further comprises a temperature control unit 1794 having a temperature sensor 17941 configured to provide sensor signals, an energy source 17942 and a second PID control 17943. It shall be understood, that the temperature control unit 1794 can also be applied to the embodiment shown in FIG. 7 or any other embodiment having a Peltier element but is not necessary for using the Peltier element. The second PID control 17943 is configured to control the Peltier element 1761 by regulating the energy supply by controlling the energy source 17942.

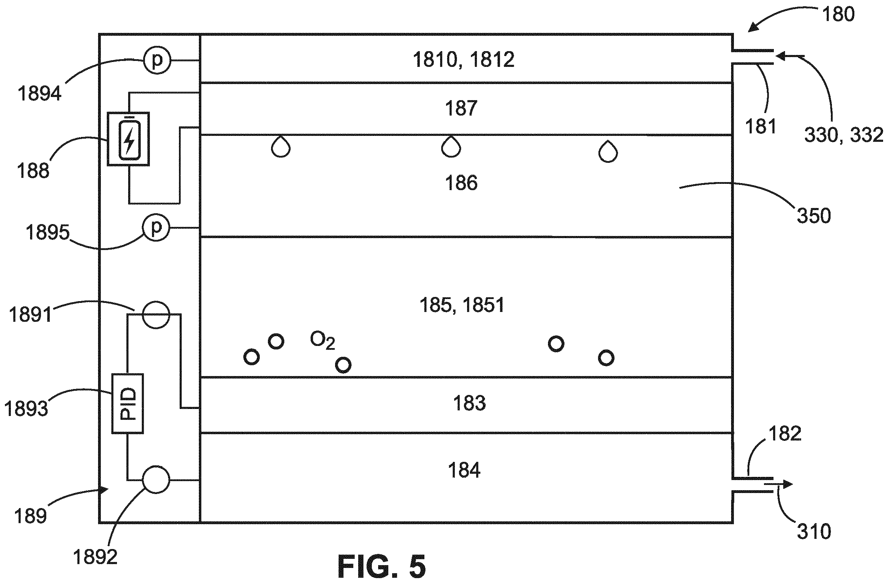

FIG. 5 shows a third embodiment of the aggregate 180. As described with respect to the first and second embodiment, the aggregate 180 has an aggregate inlet port 181, an outlet port 182 and a PEM electrolyzer 183 configured to generate hydrogen 310 that is stored in a pressurized hydrogen buffer 184. The aggregate 180 has a source of water 185 that has a water buffer 1851 and an oxygen buffer 186. The aggregate inlet port 181 having an exhaust gas filter 1812 is preferably connected to an exhaust port 112 of the gas chromatograph 100 (cf., FIG. 1) and configured to receive exhaust gases 332 comprising hydrogen from the gas chromatograph 100 and thus serving as hydrogen containing medium 330. The aggregate 180 further has a fuel cell 187 that is configured for filtering volatile organic compounds thereby generating electricity that is preferably stored in a battery 188 coupled to the fuel cell 187. The stored oxygen in the oxygen buffer may be used for the combustion process. The stored energy is preferably provided to the gas chromatograph 100, e.g. to one of the heaters 122, 142. In addition to the generation of electricity, the hydrogen fuel cell 187 emits water during operation that flows downwards and is finally received and stored in the water buffer 1851 while the oxygen 350 from the water buffer 1851 rises and is stored in the oxygen buffer 186. The fuel cell 187 is preferably arranged above the water buffer 1851, when the aggregate 180 is in an upright position.

In an alternative embodiment (not shown), the generated electricity may directly be supplied to the PEM electrolyzer 183.

The aggregate 180 further comprises a control unit 189 having an energy source 1891 and a sensor 1892 that is e.g. a flow sensor 1892 in the shown embodiment and configured to provide signals to a PID-controller 1893 for controlling the energy source 1891. The controllable energy source 1891 is a voltage supply in the shown embodiment.

The control unit 189 is configured to control the PEM electrolyzer 183 depending on the pressure in the pressurized hydrogen buffer 184 that is monitored by the sensor 1892. The amount of hydrogen 310 generated by the PEM electrolyzer 183 depends on the provided energy, defined by supplied current or voltage, in particular DC voltage, and thus the PEM electrolyzer 183 can be controlled via supply of DC voltage by means of the control unit 189.

The control unit 189 further comprises a second pressure sensor 1894 configured to control the pressure of the incoming exhaust gas 332 and/or a third pressure sensor 1895 to control the pressure in the oxygen buffer 186.

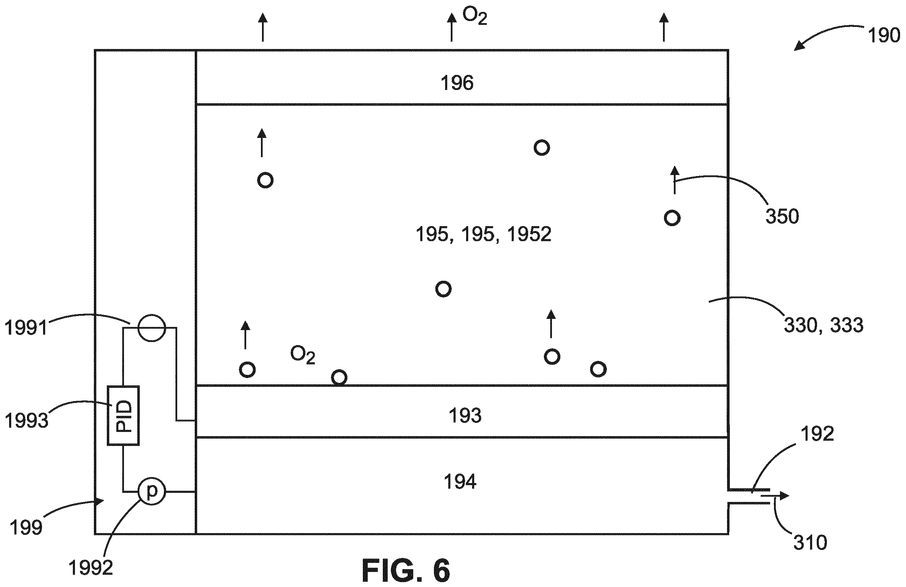

FIG. 6 shows a fourth embodiment of the aggregate 190. The aggregate 190 comprises an outlet port 192 that is configured to be coupled to the gas chromatograph 100 as shown in FIG. 1.

The aggregate 190 further comprises a PEM electrolyzer 193, a pressurized hydrogen buffer 194 and a source of water 195. The PEM electrolyzer 193 is configured for PEM electrolysis of the water provided by the source of water 195 in order to generate hydrogen 310 that is stored in the pressurized hydrogen buffer 194. The pressurized hydrogen buffer 194 is in fluid connection with the outlet port 192 for supplying the hydrogen 310 to the gas chromatograph 100.

In the fourth embodiment, the source of water 195 comprises preferably a water filled open cell foam 1951 or a desiccant 1952, such as a zeolite or a silica gel. The water 333 stored in the source of water 195 serves as hydrogen containing medium 330 and is used for PEM electrolysis executed by the PEM electrolyzer 193 as described above. Oxygen 350 generated during electrolysis rises through the water filled open cell foam 1951 and passes a gas diffusion layer 196 that is preferably provided on top of the water filled open cell foam 1951 when the aggregate 190 is in an upright position. The gas diffusion layer 196 is configured to allow an outward flow of oxygen 350 while preventing ingress of fluids and leakage of water 195.

The aggregate 190 further comprises a control unit 199 having an energy source 1991 and a pressure sensor 1992 that is configured to provide signals to a PID-controller 1993 to control the energy source 1991. The controllable energy source 1991 is a voltage supply in the shown embodiment.
The control unit 199 is configured to control the PEM electrolyzer 193 depending on the pressure in the pressurized hydrogen buffer 194 that is monitored by the pressure sensor 1992.

FIG. 7 shows a fifth embodiment of the aggregate 200. The aggregate 200 comprises an inlet port 201 equipped with a exhaust gas filter 2012 and coupled to the exhaust port 112 of the gas chromatograph 100 (cf. FIG. 1) for receiving exhaust gas 332 serving as hydrogen containing medium 330. The aggregate 200 further comprises a pressurized hydrogen buffer 204 configured to store hydrogen 310 and an outlet port 202 in fluid connection with the pressurized hydrogen buffer 204. The aggregate 200 further has a hydrogen pump 205 configured to pump filtered hydrogen 310 from the exhaust gas filter 2012 into the pressurized hydrogen buffer 204.

The aggregate 200 further comprises a control unit 209 having an energy source 2091 and a first pressure sensor 2092 that is configured to provide signals to a PID-controller 2093 to control the energy source 2091. The controllable energy source 2091 is a voltage supply in the shown embodiment.

The control unit 209 is configured to control the hydrogen pump 205 depending on the pressure in the pressurized hydrogen buffer 204 that is monitored by the first pressure sensor 2092. The amount of hydrogen pumped by the hydrogen pump 205 depends on the provided energy, defined by supplied voltage or current. The control unit 209 further has a second pressure sensor 2094 configured to monitor the pressure of the incoming exhaust gas from the gas chromatograph 100 that is filtered by the exhaust gas filter 2012.

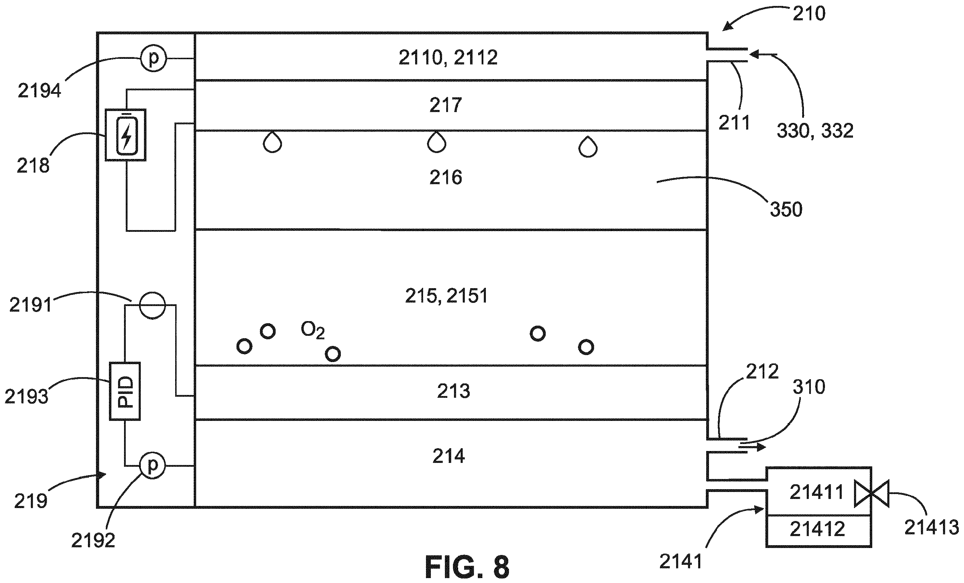

FIG. 8 shows a sixth embodiment of the aggregate 210. Similar to the embodiment shown in FIG. 5, the aggregate 210 has an aggregate inlet port 211, an outlet port 212, a fuel cell 217 and a PEM electrolyzer 213 configured to generate hydrogen 310 that is stored in a pressurized hydrogen buffer 214. Further, the aggregate has a control unit with a PID-controller 2193, a pressure sensor 2192 and a source of energy 2191. The aggregate 210 further has a water buffer 2151 and an oxygen buffer 216. Reference is made to the above description of FIG. 5.

The aggregate 210 differs from the embodiment shown in FIG. 5 by an idle mode storage unit 2141 in fluid communication with the pressurized hydrogen buffer 214. The idle mode storage unit 2141 comprises a solid storage medium 21412 configured to form hydride in case of contact with hydrogen, a pressure release valve 21413 configured to release pressure from the idle mode storage unit 2141 and a hydride storage heater 21412 configured to heat the solid storage medium 21412 to reform hydrogen from the formed hydride.

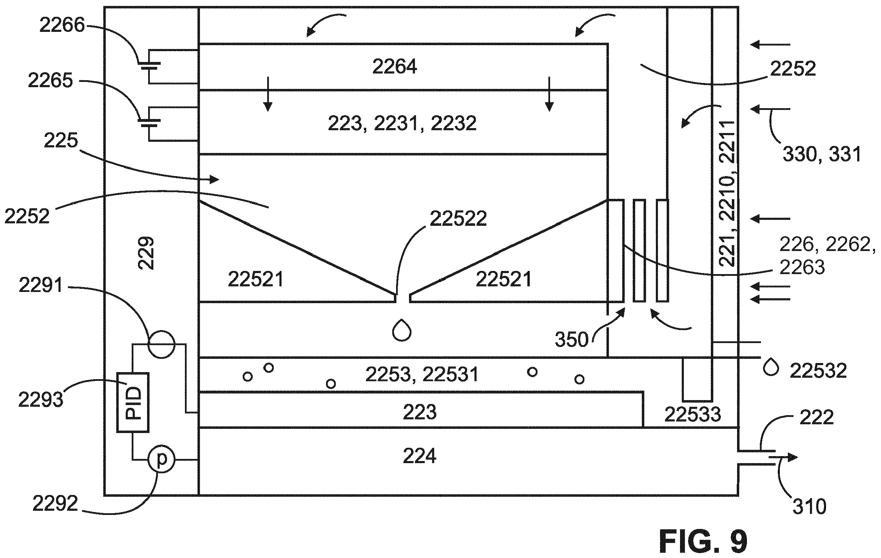

FIG. 9 shows a seventh embodiment of the aggregate 220. The aggregate 220 comprises an aggregate inlet port 221 equipped with an air filter 2211 for receiving ambient air 331 serving as a hydrogen containing medium 330, and an outlet port 222 that is configured to be coupled to the gas chromatograph 100 as shown in FIG. 1 for providing hydrogen 310.

The aggregate 220 further comprises a PEM electrolyzer 223, a pressurized hydrogen buffer 224 and a source of water 225. The PEM electrolyzer 223 is configured for PEM electrolysis of the water provided by the source of water 225 in order to generate hydrogen 310 that is stored in the pressurized hydrogen buffer 224. The pressurized hydrogen buffer 224 is in fluid connection with the outlet port 222 for supplying the hydrogen 310 to the gas chromatograph 100.

In the embodiment shown in FIG. 9, the source of water 225 is a condenser 2251 having a flow passage 2252. The flow passage 2252 has a condenser surface 22521 that is actively cooled, a condensate port 22522 configured to guide condensate 340 from the condenser surface 22521 towards a condensate buffer 2253. The flow passage 2252 further has an oxygen port 22523 configured to allow rise of oxygen 350 from the condensate buffer 2253. The condensate port 22522 is provided at the lowest point 22524 of the flow passage 2252. Thus, the condensate 340 flows along the condenser surface 22521 towards the lowest point 22524, passes through the condensate port 22522, and is finally stored in the condensate buffer 2253. In the shown embodiment, the condensate buffer 2253 comprises a sump 22531 having an overflow 22532 configured to allow excess of condensate and a water seal 22533 configured to prevent inflow of air into the sump 22531.

The flow passage 2252 defines a lid 22534 of the sump 22531 in which the ports comprising the condensate port 22524 and the oxygen port 22523 are provided in order to avoid evaporation of the stored condensate 340.

In order to cool the condenser 2251, the aggregate 220 further comprises a cooling unit 226. The cooling unit 226 has a heat sink 2262 and a fan 2264 configured to provide a cooling airflow in order to cool the heat sink 2262. The cooling unit 226 has a cooling passage 2263 defined in to the heat sink 2262 through which gas flow exiting the flow passage 2252 can flow and exit the aggregate 220 via the fan 2264 and the heat sink 2262.

The aggregate 220 comprises an intermediate storage unit 223 arranged downstream the aggregate inlet port 221 and upstream the PEM electrolyzer 223 having a desiccant bed 2231 for adsorbing water from the hydrogen containing medium 330 and a heating part 2232 for evaporating water stored in the desiccant bed 2231.

Water from moist air is collected, in particular adsorbed at ambient temperature in the desiccant bed 2231 comprising e.g. silica gel, zeolite, activated alumina, calcium chloride, by blowing air through the desiccant bed 2231. When the desiccant bed 2231 is saturated or when the condensate buffer 22531 is empty the desiccant bed 2231 is heated by means of the heating part 2232 having an energy supply 2265 to desorb the moisture from the desiccant bed 2231. The hot humid air is condensed at a condenser surface 22521. When the desiccant bed 2231is dried the heating part 2232 is switched off by means of an energy supply 2265 to start the next cycle of moisture adsorption.

The heat sink 2266 is configured to remove heat from the condenser surface 22521 during the desorption phase to keep the condenser surface 22521 near ambient temperature. The condenser surface 22521 may have a hydrophobic coating to facilitate removal of the condensed water. The condenser surface may have features to increase the surface area. The dried air that is generated during the adsorption phase may be used as input for the pre-concentrator 120 (cf. FIG. 1) to extract the analyte 320 contained in the air.

The aggregate 220 further comprises a control unit 229 having an energy source 2291 and a pressure sensor 2292 that are configured to provide signals to a PID-controller 2293 for controlling the energy source 2291.

The control unit 229 is configured to control the PEM electrolyzer 223 depending on the pressure in the pressurized hydrogen buffer 224 that is monitored by the pressure sensor 2292. The amount of hydrogen generated by the PEM electrolyzer 223 depends on the provided current or voltage, in particular DC voltage, and thus the PEM electrolyzer 223 can be controlled via supply of energy by means of the control unit 229.

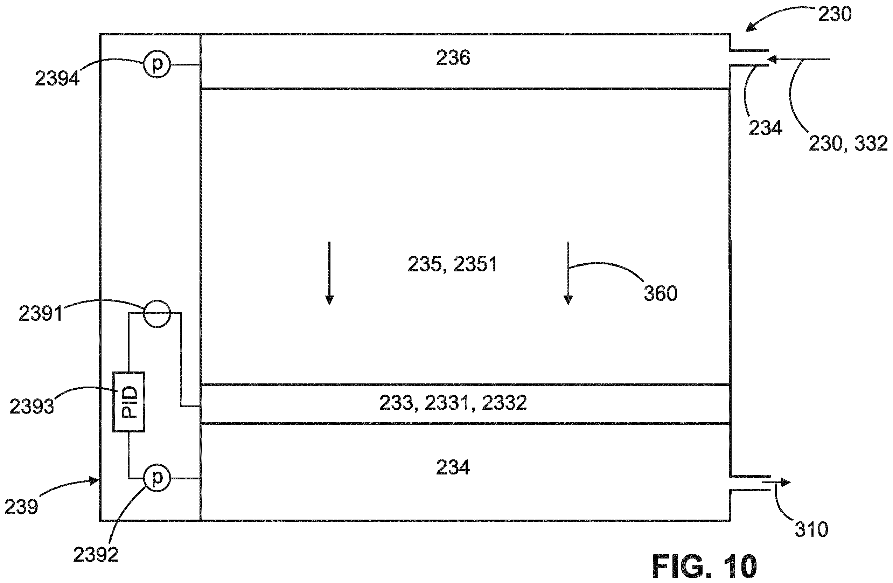

FIG. 10 shows an eight embodiment of the aggregate 230. The aggregate 230 comprises an inlet port 231 equipped with a exhaust gas filter 2312 and a pressurized hydrogen buffer 234 configured to store hydrogen 310 and an outlet port 232 in fluid connection with the pressurized hydrogen buffer 234. The aggregate 230 further has a hydrogen pump 235 configured to pump filtered hydrogen 310 from the exhaust gas filter 2312 into the pressurized hydrogen buffer 234 as described with regard to the fifth embodiment shown in FIG. 7. The embodiment shown in FIG. 10 differs from the fifth embodiment in that the aggregate 230 comprises a drying unit 233 arranged upstream of the outlet 232 in the transport direction T which is configured dry the hydrogen 310. The drying unit 233 comprises at may either comprise a drying desiccant 2331 for adsorbing humidity form the generated hydrogen 310, or a heater 2332 for heating the generated hydrogen 310.

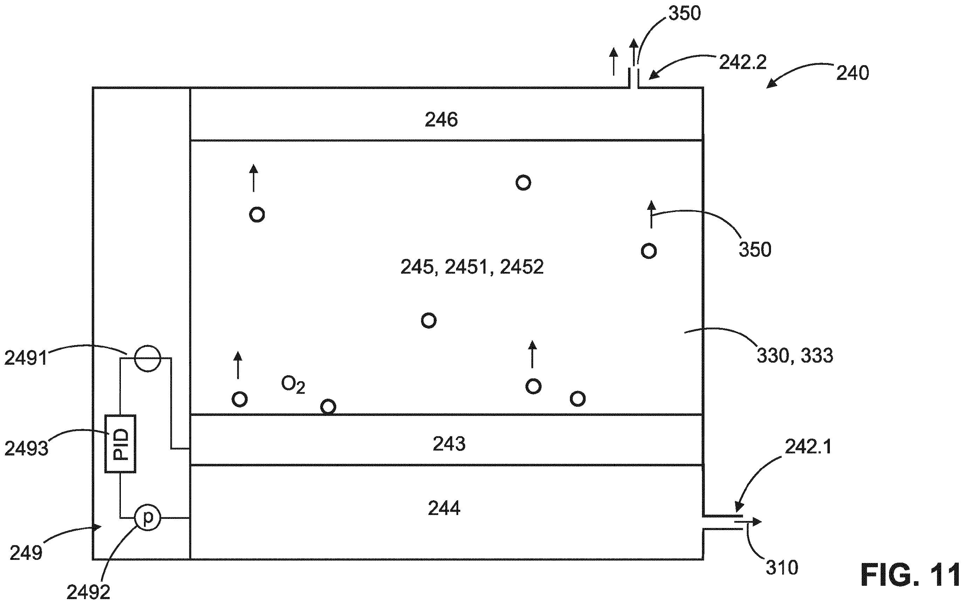

FIG. 11 shows a ninth embodiment of the aggregate 240. The aggregate 240 comprises a PEM electrolyzer 243, a pressurized hydrogen buffer 244 and a source of water 245 as shown in FIG. 6. In order to avoid repetitions, reference is made to the description of FIG. 4 and only differences are discussed in the following. The aggregate 240 further comprises an oxygen buffer 246 for storing the rising oxygen 350. The aggregate 240 has a first outlet port 242.1 that is configured to be coupled e.g. to the detector 150 of the gas chromatograph 100 for providing hydrogen 310 serving as a combustion gas (cf. FIG. 2). Further, the aggregate 240 has a second outlet port 242.2 associated to the oxygen buffer 246 that is configured to be coupled e.g. to the pre-concentrator 120 of the gas chromatograph 100 for providing oxygen 350 serving as a mobile phase (cf. FIG. 2).

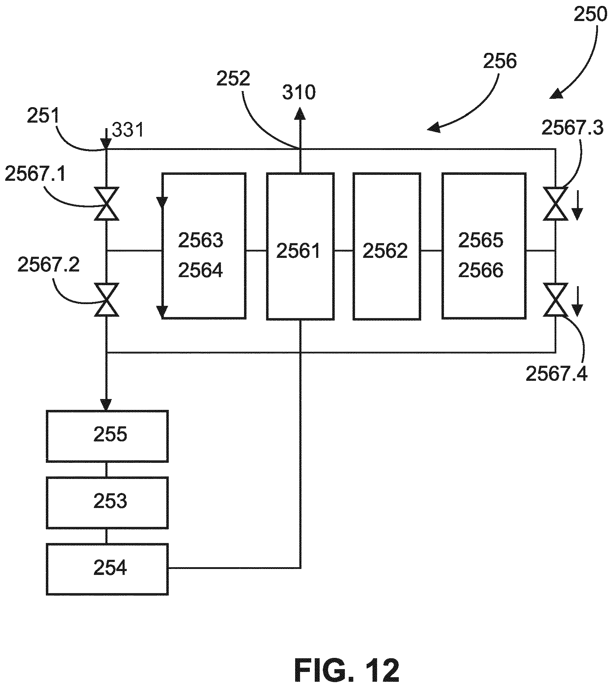

FIG. 12 shows a tenth embodiment of the aggregate 250. The aggregate 250 comprises an aggregate inlet port 251 allowing ambient air 331 serving as hydrogen containing medium to enter and an outlet port 252 that is configured to be coupled to the gas chromatograph 100 as shown in FIG. 1.

The aggregate 250 preferably comprises a PEM electrolyzer 253, a pressurized hydrogen buffer 254 and a source of water 255. The PEM electrolyzer 253 is configured for PEM electrolysis of the water provided by the source of water 255 in order to generate hydrogen that is stored in the pressurized hydrogen buffer 254. The pressurized hydrogen buffer 254 is in fluid connection with the outlet port 252 for supplying the hydrogen 310 to the gas chromatograph 100 via the outlet port 252. In the embodiment shown in FIG. 12, the source of water 255 comprises a condenser (not shown).

The aggregate 250 comprises a nafion dryer unit 256 configured to remove moisture from moist hydrogen serving as the hydrogen containing medium 330 and to process the containing medium 330 to generate dry hydrogen 310. The nafion dryer unit 256 may either be used stand alone or in combination with PEM electrolyzer 253, the pressurized hydrogen buffer 254 and the source of water 255.

The nafion dryer unit 256 comprises a nafion dryer 2561, an air conveying unit 2562, e.g. a pump or a fan, a first nafion dryer desiccant bed 2563 having a first bed heater 2564 and preferably a second nafion dryer desiccant bed 2565 having a second bed heater 2566. The aggregate 250 further has a first valve 2567.1 and a second valve 2567.2 both associated to the first nafion dryer desiccant bed 2563. The first valve 2567.1 being arranged between the inlet 251 and the first nafion dryer desiccant bed 2563. The second valve 2567.2 being arranged between the first nafion dryer desiccant bed 2563 and the condenser 255 in case of using the nafion dryer unit with the latter or between the first nafion dryer desiccant bed 2563 and an exhaust outlet (not shown).

The first valve 2567.1 is either a check valve allowing flow only from the inlet 251 towards the first nafion dryer desiccant bed 2563 or a controllable valve configured for selectively allowing the flow from the inlet 251 towards the first nafion dryer desiccant bed 2563. The second valve 2567.2 is either a check valve allowing flow only from the first nafion dryer desiccant bed 2563 towards the condenser 255 or the exhaust outlet (not shown) or a controllable valve configured for selectively allowing the flow.

A flow of inflowing air 331 is selectively enabled by the first valve 2567.1 and the inflowing air 331 is blown or pumped by the air conveying unit 2562 through the first nafion dryer desiccant bed 2563 which is configured for drying the inflowing air 331 by storing moisture. The dried air stemming from the first nafion dryer desiccant bed 2563 is provided to the nafion dryer 2561 serving as a purge gas.

In the nafion dryer 2561, moist hydrogen stemming e.g. from the hydrogen buffer 254 or from the outlet of the gas chromatograph 100 flows through a tubing and the dry purge gas flows countercurrent outside the tubing. While the partial pressure of water in the purge gas is less than in the moist hydrogen gas, a membrane of the nafion dryer 2561 will selectively transfer water and water vapor from the sample gas across its membrane and into the purge gas flow, yielding a dry hydrogen output. The nafion dryer 2561 is coupled to an outlet 252 for providing the dry hydrogen 310 to the gas chromatograph 100 for serving as a mobile phase or a combustion gas.

By heating the first nafion dryer desiccant bed 2563 by the first bed heater 2564 and reversing the flow by the air conveying unit 2562, the stored moisture is released and can be guided via the second valve 2567.2 to the condenser 255. The condenser 255 is configured for condensing the moist air from the first nafion dryer desiccant bed 2563, wherein the PEM electrolyzer 253 is configured for generating hydrogen by electrolysis of the condensate and the hydrogen buffer 254 stores the hydrogen as described with regard to the embodiment shown in FIG. 3. Instead, the moist air from the first nafion dryer desiccant bed 2563 is exhausted via the exhaust outlet (not shown).

The aggregate 250 preferably has a third valve 2567.3 and a fourth valve 2567.4both associated to the second nafion dryer desiccant bed 2565. The third valve 2567.3 being arranged between the inlet 251 and the second nafion dryer desiccant bed 2565. The fourth valve 2567.4 is arranged between the second nafion dryer desiccant bed 2565 and the condenser 255 in case of using the nafion dryer unit 256 with the latter or arranged between the second nafion dryer desiccant bed 2565 and an exhaust outlet (not shown). In case the first nafion dryer desiccant bed 2563 is saturated, the air conveying unit 2562 is configured to reverse the flow such that a flow of inflowing air 331 is (selectively) enabled by the third valve 2567.3 and the inflowing air 331 is blown or pumped by the air conveying unit 2562 through the second nafion dryer desiccant bed 2565 which is configured for drying the inflowing air 331 by storing moisture. The dried air stemming from the second nafion dryer desiccant bed 2565 is provided to the nafion dryer 2561 serving as a purge gas as described above. As described above with regard to the first nafion dryer desiccant bed 2563, when having the second nafion dryer desiccant bed 2565 providing purge gas to the nafion dryer 2561 and reaching a saturation limit, the moisture from the second nafion dryer desiccant bed 2565 can be removed accordingly. For removing the stored moisture from the second nafion dryer desiccant bed 2565, the second bed heater 2566 can be used, the flow has to be reverted by the air conveying unit 2562 and the moist air can be guided to the condenser 255 or exhausted as described with regard to drying of the first nafion dryer desiccant bed 2563.

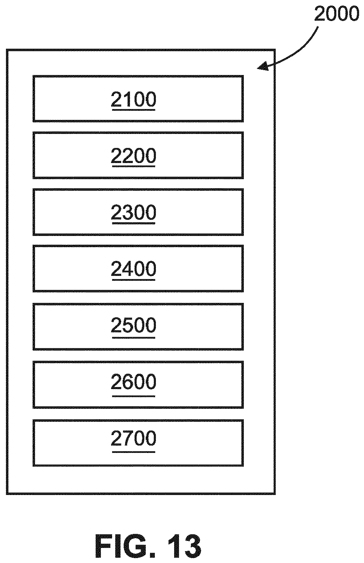

FIG. 13 shows a schematic view of a method 2000 for operating a gas chromatographic system 1000 according to the embodiment shown in FIG. 1. The gas chromatographic system 1000 has an aggregate according to any of the embodiments shown in FIGs. 3 to 12.

In a first step 2100, pressurized hydrogen 310 is generated in an aggregate 160, 170, 180, 190, 200, 210, 220, 230, 240, 250. In a second step 2200, the pressurized hydrogen is supplied to the gas chromatograph 100.

Preferably, supplying 2200 hydrogen 310 to the gas chromatograph 100 comprises supplying 2210 the hydrogen 310 to the injector 110 for supplying the hydrogen 310 serving as a mobile phase for carrying the analyte 320.

In addition or in alternative, supplying 2200 hydrogen 310 to the gas chromatograph 100 preferably comprises supplying 2220 the hydrogen 310 to the pre-concentrator 120 for supplying the hydrogen 310 serving as a mobile phase for carrying the analyte 320.

In addition or in alternative, supplying 2200 hydrogen 310 to the gas chromatograph 100 preferably comprises supplying 2230 the hydrogen 310 to the column 140 for supplying the hydrogen 310 serving as a mobile phase for carrying the pre-concentrated analyte 320.

In a third step 2300, an analyte 320 is injected into one or more pre-concentrators 120. A fourth step 2400 comprises concentrating the analyte 320 comprising volatile organic compounds in the one or more pre-concentrators 120. Afterwards, in a fifth step 2500, the analyte 320 is carried towards the column 140 in the transport direction T.

In a sixth step 2600, the method 2000 comprises guiding the pre-concentrated analyte 320 carried by the mobile phase 310 through a column 140, wherein the column 140 is equipped with a stationary phase 141. In a last step 2700, the method 2000 comprises detecting the volatile organic compounds eluted from the column 140 by a gas detector 150.

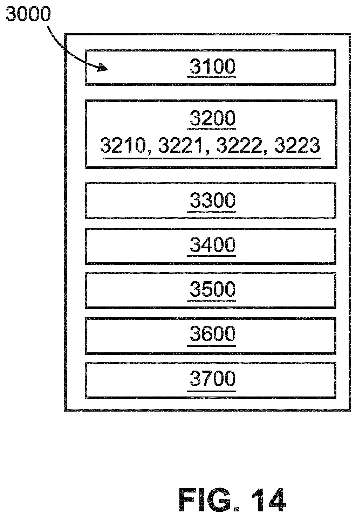

FIG. 14 shows an alternative embodiment of a method 3000 for operating a gas chromatographic system 1000' shown in FIG. 2.

In a first step 3100, pressurized hydrogen 310 and oxygen 350 as a by-product is generated in an aggregate 160, 170, 180, 190, 200, 210, 220, 230, 240, 250. In a second step 3200, the pressurized hydrogen is supplied to the gas chromatograph 100, wherein supplying 3200 hydrogen 310 to the gas chromatograph 100 comprises supplying 3210 the hydrogen 310 serving as a combustion gas to the gas detector 150 for operation of the gas detector 150. Further, the method 3000 comprises supplying 3220 oxygen 350 generated as a by-product in the aggregate 160, 170, 180, 190, 200, 210, 220, 230, 240, 250 to the gas chromatograph 100.

Preferably, supplying 3220 oxygen 350 comprises supplying 3221 the oxygen 350 to the injector 110 for supplying the oxygen 350 serving as a mobile phase for carrying the analyte 320.

In addition or in alternative, supplying 3220 oxygen 350 comprises supplying 3222 the oxygen 350 to the pre-concentrator 120 for supplying the oxygen 350 serving as a mobile phase for carrying the analyte 320.

In addition or in alternative, supplying 3220 oxygen 350 comprises supplying 3222 the oxygen 350 to the column 140 for supplying the oxygen 350 serving as a mobile phase for carrying the pre-concentrated analyte 320.

In a third step 3300, the analyte 320 is injected into one or more pre-concentrators 120. A fourth step 3400 comprises concentrating the analyte 320 comprising volatile organic compounds in the one or more pre-concentrators 120. Afterwards, in a fifth step 3500, the analyte 320 is carried towards the column 140 in the transport direction T.

In a sixth step 3600, the method 3000 comprises guiding the pre-concentrated analyte 320 carried by the mobile phase provided by the oxygen 350 through a column 140, wherein the column 140 is equipped with a stationary phase 141. In a last step 3700, the method 3000 comprises detecting the volatile organic compounds eluted from the column 140 by the gas detector 150, wherein the gas detector 150 detects the volatile organic compounds by a combustion process under consumption of the hydrogen 310 provided by the aggregate 160, 170, 180, 190, 200, 210, 220, 230, 240, 250.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

The invention relates to a gas chromatographic system for detecting volatile organic compounds in an analyte with a gas chromatograph having an injector for injecting analyte, a pre-concentrator, a column equipped with a stationary phase and a gas detector configured to detect the analyte component eluted from the column. The invention suggests an aggregate having an outlet coupled to the gas chromatograph and being configured to receive and process a hydrogen containing medium for generating hydrogen and supplying the hydrogen to the gas chromatograph. The invention further relates to such an aggregate and to a method of operating a chromatographic system.

## Claims

1. Gas chromatographic system (1000) for detecting volatile organic compounds in an analyte (320), comprising:
a gas chromatograph (100) having an injector (110) for injecting the analyte into the gas chromatograph (100), a pre-concentrator (120) configured to concentrate the injected analyte (320), a column (140) equipped with a stationary phase (141) and a gas detector (150) configured to detect the analyte (320) component eluted from the column (140); and
an aggregate (160, 170, 180, 190, 200, 210, 220, 230, 240, 250) having an outlet (162, 172, 182, 192, 202, 212, 222, 232, 242, 252) coupled to the gas chromatograph (100) and being configured to receive and process a hydrogen containing medium (330) for generating hydrogen (310) and supplying the hydrogen (310) to the gas chromatograph (100).

2. Gas chromatographic system (1000) according to claim 1,
wherein the aggregate (160, 170, 180, 190, 210, 220, 230, 250) comprises a source of water ( 165, 175, 185, 195, 255) and a polymer electrolyte membrane (PEM) electrolyzer (163, 173, 183, 193, 213, 223, 233, 253) configured to electrolyze the water.

3. Gas chromatographic system (1000) according to claim 1 or 2,
wherein the aggregate (160, 170, 180, 190, 200, 210, 220, 230, 240, 250) has an aggregate inlet port (161, 171, 181, 201, 211, 221, 231, 251) equipped with a filter (1611, 1711, 1812, 2012) configured to filter the hydrogen containing medium (330), and
wherein the hydrogen containing medium (330) is ambient air (331) and the filter (181, 201) is an air filter (1611, 1711, 2211) configured to filter inflowing ambient air (331), or
wherein the hydrogen containing medium (330) is hydrogen containing exhaust gas (332) from the gas chromatograph (100) and the filter (181, 201) is an exhaust gas filter (1812, 2012) configured to filter inflowing exhaust gas (332), or
wherein the hydrogen containing medium (330) is hydrogen containing exhaust gas (332) from the gas chromatograph (100) and the filter is a PEM fuel cell (187) configured to filter inflowing exhaust gas (332).

4. Gas chromatographic system (1000) according to any one of the preceding claims,
wherein the aggregate (160, 170, 180, 190, 200, 210, 220, 230, 240, 250) comprises a pressurized hydrogen buffer (164, 174, 184, 194, 204, 214, 224, 234, 244, 254) being in fluid connection with the outlet (162, 172, 182, 192, 202, 212, 222, 232, 242, 252) to provide a flow of pressurized hydrogen (310).

5. Gas chromatographic system (1000) according to any one of the claims 2 to 4,
wherein the source of water (165, 175, 225) comprises a condenser (1651, 1751, 2251) for water harvesting and a condensate buffer (1653, 1753, 2253) for water storing, and the condenser (1651, 1751, 2251) comprises a flow passage (1652, 1752, 2252) having a condenser surface (16521, 17521, 22521) and a cooling unit (166, 176, 226) configured to cool the condenser surface (16521, 17521, 22521), or
wherein the source of water (195, 235) is arranged adjacent to the PEM electrolyzer (193, 233) and comprises at least one of the following:
- an open cell foam (1951) filled with water (333),
- a desiccant (233) having a desiccant bed (2331) and a heating part (2332) for evaporating water stored in the desiccant bed (2331), or
wherein the source of water (185) comprises a water buffer (1851) and the aggregate (180) comprises a or the PEM fuel cell (187) configured to produce electricity thereby generating water stored in the water buffer (1851), wherein oxygen (350) rising from the water buffer (1851) is stored in an oxygen buffer (186).

6. Gas chromatographic system (1000) according to claim 5,
wherein the cooling unit (166, 176, 226) comprises a Peltier element (1661, 1761, 2261), a heat sink (166, 176, 226) and an energy supply (1665, 1765, 2265) coupled to the Peltier element (1661, 1761, 2261) for providing a voltage, such that a warm side (16611, 17611) of the Peltier element (1661, 1761, 2261) adjacent the heat sink (166, 176, 226) and an opposite cold side (16612, 17612) of the Peltier element (1661, 1761, 2261) facing the condenser surface (16521, 17521, 22521) are formed.

7. Gas chromatographic system (1000) according to claim 5 or 6,
wherein the condensate buffer (1653) further has a lid (16534) comprising at one or more of the following ports (16523, 16522):
- a condensate port (16522) configured to connect the flow passage (1652) and the condensate buffer (1653) to guide condensate (340) from the condenser surface (16521) into the condensate buffer (1653),
- an oxygen port (16523) configured to allow rise of oxygen (350) from the condensate buffer (1653) into the flow passage (1652), when the aggregate (160) is in upright position.

8. Gas chromatographic system (1000) according to claim any of the claims 5 to 7,
wherein the condensate buffer (1653) comprises a sump (16531) arranged below the condenser (1651) and above the PEM electrolyzer (163), when the aggregate (160) is in an upright position.

9. Gas chromatographic system (1000) according to claim 5 to 6,
wherein the condenser (1751) comprises a number of thermal conductors (17522, 17523) connecting the PEM electrolyzer (173) and the Peltier element (1761) for cooling a contact surface (1731) of the PEM electrolyzer (173) which at least partly defines the condenser surface (17521),
wherein a receiving space (177) is formed between the number of thermal conductors (17522, 17523), the contact surface (1731) and a thermal insulation (178) attached to the cold side of the Peltier element,
the receiving space (177) defining the flow passage and being configured to receive the condensate buffer (1753).

10. Gas chromatographic system (1000) according to claim 4,
wherein the aggregate (200) comprises a hydrogen pump (205) configured to pump filtered hydrogen (360) from the exhaust gas filter (201) to the pressurized hydrogen buffer (204).

11. Gas chromatographic system (1000) according to any one of the claims 2 to 10,
wherein the aggregate (160, 170, 180, 190, 200, 210, 220, 230, 240, 250 has a control unit (169, 179, 189, 199, 200, 219, 229) having a controllable energy source (1691, 1791, 1891, 1991, 2091, 2291) configured to supply a voltage or current, at least one sensor (1692, 1792, 17941, 1892, 1992, 2092, 2192, 2292) for providing a sensor signal and a controller (1693, 1793, 1893, 1993, 2093, 2193, 2293), in particular a PID-controller, configured to control the voltage or current supply based on the sensor signal, the control unit being configured for one, more or all of:
controlling the hydrogen harvesting in the pressurized hydrogen buffer (164, 174, 184, 194, 204, 214, 224, 234, 244, 254) by having the controller (1693, 1793, 1893, 1993, 2093, 2193, 2293) configured to control the supply of voltage or current supplied by the energy source (1691, 1791, 1891, 1991, 2091, 2291) to the PEM electrolyzer (163, 173, 183, 193, 213, 223, 233) based on sensor signals of the sensor (1692, 1792, 17941, 1892, 1992, 2092, 2192, 2292), wherein the sensor is a pressure sensor (1692, 1792, 1992, 2092, 2292) detecting the pressure in the pressurized hydrogen buffer (164, 174, 184, 194, 204, 214, 224, 234, 244, 254) or a flow sensor (1892) detecting the hydrogen flow into the pressurized hydrogen buffer, or
controlling the condenser surface (17521) temperature by having the controller (1793) configured to control the supply of voltage or current supplied by the energy source (1791) to the cooling unit (176) based on the sensor signal, wherein the sensor is a temperature sensor (17941) detecting the temperature of the condenser surface (17521), or
controlling the condensate amount stored in the condensate buffer (1653) by having the controller (1693) configured to control the supply of voltage or current supplied by the energy source (1691) to the cooling unit (166) based on a signal of a condensate level monitoring unit (1695), or
controlling the condensate amount stored in the condensate buffer (1653) by having the controller (1693) configured to control a float switch (16535) associated to the condensate buffer (1653),
controlling the hydrogen harvesting in the pressurized hydrogen buffer (204,) by having the controller (2093) configured to control the supply of voltage or current supplied by the energy source (2091) to the pump (205) based on sensor signals of the sensor (2092), wherein the sensor (2092) is a pressure sensor (2092) detecting the pressure in the pressurized hydrogen buffer (204) or a flow sensor (1892) detecting the hydrogen flow into the pressurized hydrogen buffer (204), or
controlling the water amount stored in the water buffer (1851, 2151) by having the controller (1893, 2193) configured to control the supply of voltage or current supplied by the energy source (1891, 2191) to the fuel cell (187, 217) based on the sensor signals of the sensor (1892, 2192), wherein the sensor is a pressure sensor (2192) detecting the pressure in the pressurized hydrogen buffer (184, 214) or a flow sensor (1892) detecting the hydrogen flow into the pressurized hydrogen buffer (184, 214).

12. Gas chromatographic system (1000) according to any one of the preceding claims,
wherein the aggregate (210) comprises an idle mode storage unit (2141) in fluid communication with the pressurized hydrogen buffer (214), the idle mode storage unit (2141) comprising a solid storage medium (21411) configured to form hydride in case of contact with hydrogen, a pressure release valve (21413) configured to release pressure from the idle mode storage unit (2141) and a hydride storage heater (21412) configured to heat the solid storage medium (21411) to reform hydrogen from the formed hydride.

13. Gas chromatographic system (1000) according to any one of the claims 3 to 12,
wherein the aggregate (220) comprises an intermediate storage unit (223) arranged downstream the aggregate inlet port (221) and upstream the PEM electrolyzer (223) having a desiccant bed (2231) for adsorbing water from the hydrogen containing medium (330) and a heating part (2232) for evaporating water stored in the desiccant bed (2231).

14. Gas chromatographic system (1000) according to any one of the preceding claims,
wherein the aggregate (230) comprises a drying unit (233) arranged upstream of the outlet (232) and being configured to dry the hydrogen (310), wherein the drying unit (233) comprises at least one of the following:
- a drying adsorbent (2331) for storing humidity form the generated hydrogen (310).

15. Gas chromatographic system (1000) according to any one of the claims 1 to 5, further comprising:
a nafion dryer unit (256) configured to remove moisture from a hydrogen containing medium (330), the nafion dryer unit (256) having a nafion dryer (2561), an air conveying unit (2562), at least one nafion dryer desiccant bed (2563, 2565).

16. Gas chromatographic system (1000) according to any one of the preceding claims,
wherein the outlet (162, 182, 192, 202, 212, 222, 232, 242, 252) is coupled for supplying hydrogen (310) to the gas chromatograph (100) to one, more or all of the following:
- the injector (110) for supplying the hydrogen (310) serving as a mobile phase for carrying the analyte (320) in a transport direction (T),
- the pre-concentrator (120) for supplying the hydrogen (310) serving as a mobile phase for carrying the analyte (320) in the transport direction (T),
- the column (140) for supplying the hydrogen (310) serving as a mobile phase for carrying the pre-concentrated analyte (320) in the transport direction (T), or
- the gas detector (150) for supplying the hydrogen (310) serving as a combustion gas for operation of the gas detector (150).

17. Gas chromatographic system (1000) according to any one of the preceding claims, wherein the aggregate (160, 170, 180, 190, 200, 210, 220, 230, 240, 250) is configured to generate oxygen (350) as a by-product and is coupled to the gas chromatograph (100) for supplying oxygen (350) to at least one of the following:
- the injector (110) for supplying the oxygen (350) serving as a mobile phase for carrying the analyte (320) in the transport direction (T),
- the pre-concentrator (120) for supplying the oxygen (350) serving as a mobile phase for carrying the analyte (320) in the transport direction (T),
- the column (140) for supplying the oxygen (350) serving as a mobile phase for carrying the pre-concentrated analyte (320) in the transport direction (T), or
- the pre-concentrator (120) for supplying the oxygen (350) for pre-concentrating the analyte (320).

18. Aggregate (160, 170, 180, 190, 200, 210, 220, 230, 240, 250) for a gas chromatographic system (1000), in particular for a gas chromatographic system (1000) according to any one of the preceding claims, for providing a hydrogen gas flow,
the aggregate (160, 170, 180, 190, 200, 210, 220, 230, 240, 250) having an outlet (162, 182, 192, 202, 212, 222, 232, 242, 252) for coupling to the gas chromatographic system (1000) and being configured to receive and process a hydrogen containing medium (330) for generating hydrogen (310) and supplying the hydrogen (310) to the gas chromatograph (100) in a transport direction (T).

19. Method (2000) for operating a gas chromatographic system (1000), in particular a gas chromatographic system (1000) according to any of the claims 1 to 16, comprising the steps:
- generating pressurized hydrogen (310) for a gas chromatograph (2100),
- supplying (2200) the pressurized hydrogen (310) into a gas chromatograph (100),
- injecting analyte (2300) into the pre-concentrator (120) of the gas chromatograph (100),
- concentrating (2400) the analyte (320) comprising volatile organic compounds in the pre-concentrator (120),
- carrying (2500) the analyte (320) by the mobile phase (310) in the transport direction (T) from the pre-concentrator (120) to a column (140) equipped with a stationary phase (141),
- guiding (2600) the pre-concentrated analyte (320) carried by the mobile phase (310) through the column (140), and
- detecting (2700) the volatile organic compounds eluted from the column (140) by a gas detector (150).

20. Method (2000) according to claim 19,
wherein supplying (2200) hydrogen (310) to the gas chromatograph (100) comprises one, more or all of the following:
- supplying the hydrogen (310) to the injector (110) for supplying the hydrogen (310) serving as a mobile phase for carrying the analyte (320),
- supplying the hydrogen (310) to the pre-concentrator (120) for supplying the hydrogen (310) serving as a mobile phase for carrying the analyte (320),
- supplying the hydrogen (310) to the column (140) for supplying the hydrogen (310) serving as a mobile phase for carrying the pre-concentrated analyte (320), and
- supplying the hydrogen (310) to the gas detector (150) for supplying the hydrogen (310) serving as a combustion gas for operation of the gas detector (150).
